# EUROPÄISCHE PATENTSCHRIFT

(11) **EP 0 409 766 B1**
(45) Veröffentlichungstag und Bekanntmachung des Hinweises auf die Patenterteilung: **08.09.1993**
(21) Anmeldenummer: 90710017.6
(22) Anmeldetag: 04.07.1990
(51) Int. Cl.: G01N 1/22

(54) **Entnahmesonde**
Sampling probe
Sonde d'échantillonnage

(30) Priorität: 15.07.1989 DE 3923544
(43) Veröffentlichungstag der Anmeldung: 23.01.1991
(73) Patentinhaber: Hartmann & Braun Aktiengesellschaft, 60484 Frankfurt am Main (DE)
(72) Erfinder: Franck, Gerhard, Dr., D-6000 Frankfurt 90 (DE); Rumpf, Günter, D-6395 Weilrod 2 (DE)
(74) Vertreter: Meissner, Peter E., Dipl.-Ing.

(56) Entgegenhaltungen:
- DD-A- 205 004
- DE-C- 3 305 232
- US-A- 4 353 260

## Beschreibung

Die Erfindung betrifft ein Entnahmesonde für korrosive Proben nach dem Oberbegriff des Patentanspruches.
Aus der DE-PS 3305232 ist eine Vorrichtung zur Entnehmen einer heißen Gasprobe aus einem Gasvolumen bekannt, bei der in die Öffnung einer das Gasvolumen begrenzenden Wandung ein metallisches Führungsrohr verankert ist, das auf seinem hinteren Ende mit Abstand von der Wandung mit einem Flansch versehen ist, mit dem der Mantel der Entnahmevorrichtung lösbar verbunden ist.

Weitere Gasentnahmesonden sind aus DD-A-205 004 und US-A-4 353 260 bekannt.

Für eine repräsentative Probennahme müssen oft sehr lange Sonden eingesetzt werden. Je nach den baulichen Gegebenheiten kann eine Sonde nicht immer hängend eingebaut werden. Bei horizontalem Einbau und großer Sondenlänge treten durch das Eigengewicht hohe Belastungen an der Übergangsstelle Sondenrohr zum Befestigungsflansch auf. Diese statische Belastung kann durch die Fließ- oder Ströhmungsgeschwindigkeit des Mediums vergrößert und bei nichtstationären Strömungen durch dynamische Kräfte überlagert werden.
Enthalten die den Proßessen entnommenen Proben korrosive Anteile, so werden faserverstärkte Kunststoffsonden eingesetzt; jedoch ist die mechanische Festigkeit auch faserverstärkter Kunststoffe eingeschränkt, wodurch spezielle Konstruktionen mit komplizierten Geometrien oder hohem Werkstoffeinsatz bei großem Bauvolumen notwendig werden.
Es lassen sich auch kunststoffbeschichtete Metallsonden einsetzen. Die Porenfreiheit dieser Beschichtung und der fehlende mechanische Schutz reichen jedoch für einen industriellen Einsatz nicht aus.

Der Erfindung liegt die Aufgabe zugrunde, eine Entnahmesonde für korrosive Proben so zu verbessern, daß die mediumberührten Teile den Korrosionsanforderungen von Kunststoffsonden und die mechanische Belastbarkeit der einer Metallsonde entsprechen. Zur Lösung dieser Aufgabe sind die im Kennzeichen des Patentanspruches angegebenen Mittel vorgesehen.

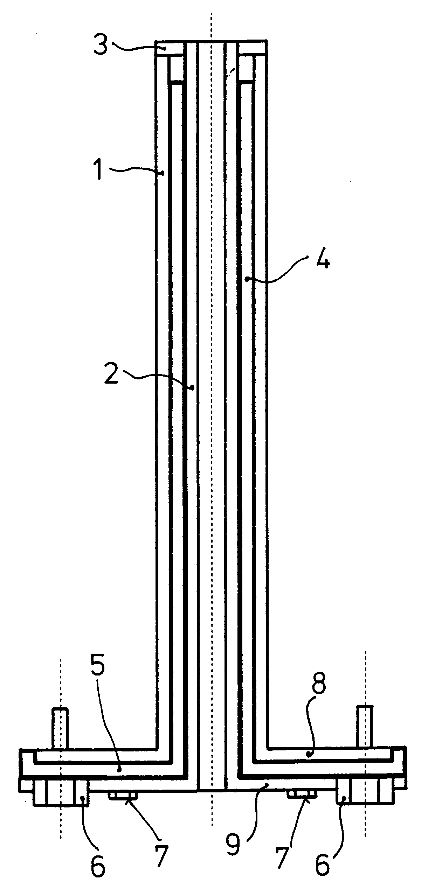

Die Erfindung wird anhand eines in der Figur dargestellten Ausführungbeispieles naher erläutert. Die Figur zeigt das Ausführungsbeispiel in einem einfachen Axialschnitt.

Die Entnahmesonde ist aus drei ineinander gesteckten Rohren aufgebaut und setzt sich zusammen aus dem mit der Probe unmittelbar in Verbindung stehenden Innenrohr 2 und einem Außenrohr 1. Zwischen diesen beiden Rohren ist ein Mittelrohr 4 eingeschoben. Jedes der drei Rohre besitzt einen eigenen Flansch 5, 8 bzw. 9 aus dem gleichen Material. Das Außenrohr 1 und das Innenrohr 2 bestehen aus Kunststoff, vorzugsweise bei erhöhten Korrosionsanforderungen und erhöhter Temperaturbelastung aus Polytetraflourethylen (PTFE) oder Polyvinylidenfluorid (PVDF). Beide Kunststoffteile sind an der Eingangsöffnung über einen Verbindungsring 3 miteinander verschweißt. Die Wandstärke des Kunststoffes ist ausreichend groß zu wählen, so daß eine mögliche Diffusion von korrosiven Anteilen in der Probe einen vernachlässigbaren Einfluß auf die innenliegende Metallarmierung hat. Das zwischen diesen beiden Kunststoffrohren 1 und 2 liegende tragende Mittelrohr 4 besteht aus einem Metallrohr mit aufgeschweißtem Flansch 5, beide vorzugsweise aus Edelstahl. Der metallische Flansch 5 ist so ausgeführt, daß eine Klammerung zum Flansch 8 des Außenrohres 1 besteht. Die Befestigungsmittel 6 der Entnahmesonde haben als Auflagepunkt den metallischen Flansch 5 des Mittelrohres 4. Die beiden Kunststoff-Flansche 8 und 9 des Innen- und des Außenrohres 1 und 2 sind separat durch Befestigungsmittel 7 am metallischen Flansch 5 befestigt.

## Patentansprüche

1. Entnahmesonde für korrosive Proben, bestehend aus einem Innenrohr (2) mit einem Flansch (9), beide aus Kunststoff, zur Probenführung sowie mit einem das Innenrohr (2) umschließendes Außenrohr (1) mit einem Flansch (8), ebenfalls beide aus Kunststoff, wobei zur Erhöhung des mechanischen Festigkeit
zwischen dem Innenrohr (2) und dem Außenrohr (1) ein tragendes Mittelrohr (4) mit einem Flansch (5), beide aus Metall, angeordnet ist, der Flansch (5) des Mittelrohres (4) den Flansch (8) des Außenrohres (1) umschließt und Befestigungsmittel (6) der Entnahmesonde am Flansch (5) des Mittelrohres (4) aufliegen.

## Claims

1. An extraction probe for corrosive samples, comprising an inner tube (2) with a flange (9), both composed of synthetic resin, for the guidance of samples, and comprising an outer tube (1), which surrounds the inner tube (2), with a flange (8), both likewise composed of synthetic resin, wherein, in order to increase the mechanical strength, between the inner tube (2) and the outer tube (1), there is arranged a bearing central tube (4) with a flange (5), both composed of metal, that the flange (5) of the central tube (4) surrounds the flange (8) of the outer tube (1) and that fixing means (6) of the extraction probe bear against the flange (5) of the central tube (4).

## Revendications

1. Sonde de prélèvement pour des échantillons corrosifs, constituée d'un tube interne (2) présentant une bride (9), les deux en matière synthétique, pour guider les échantillons, ainsi qu'un tube externe (1), entourant le tube interne (2), présentant une bride (8), les deux de même en matière synthétique, dans laquelle, pour augmenter la résistance mécanique, un tube intermédiaire porteur (4) présentant une bride (5), les deux en métal, est agencé entre le tube interne (2) et le tube externe (1), la bride (5) du tube intermédiaire (4) entourant la bribe (8) du tube externe (1) et des moyens de fixation (6) de la sonde de prélèvement se trouvant sur la bride (5) du tube intermédiaire (4).
